# EUROPÄISCHE PATENTSCHRIFT

(11) **EP 0 885 395 B1**
(45) Veröffentlichungstag und Bekanntmachung des Hinweises auf die Patenterteilung: **11.07.2001**
(21) Anmeldenummer: 97908155.1
(22) Anmeldetag: 28.02.1997
(51) Int. Cl.: G01N 35/00, C12M 3/00

(54) **TESTSYSTEM FÜR CHEMISCHE STOFFE ODER STOFFGEMISCHE**
TESTING SYSTEM FOR CHEMICAL SUBSTANCES OR MIXTURES
SYSTEME DE TEST POUR SUBSTANCES CHIMIQUES OU MELANGES DE SUBSTANCES

(30) Priorität: 05.03.1996 EP 96810124
(43) Veröffentlichungstag der Anmeldung: 23.12.1998
(73) Patentinhaber: Syngenta Participations AG, 4058 Basel (CH)
(72) Erfinder: DANIGEL, Harald, CH-4052 Basel (CH); KESSMANN, Helmut, D-79540 Lörrach (DE); KLOKOW, Gerhard, D-79618 Rheinfelden-Herten (DE); MENTZEN, Jörg, Geita (TZ); OBERGFELL, Peter, D-79106 Freiburg (DE)
(86) Internationale Anmeldenummer: EP9700985
(87) Internationale Veröffentlichungsnummer: WO9733179

(56) Entgegenhaltungen:
- EP-A- 0 323 205
- WO-A-86/04919

## Beschreibung

Die Erfindung betrifft ein Testsystem für chemische Stoffe oder Stoffgemische sowie ein Verfahren zum Testen von chemischen Stoffen oder Stoffgemischen auf ihre Wirksamkeit hin, speziell für potentielle Pflanzenschutzmittel wie Insektizide, Fungizide, Herbizide und dergleichen.

Aus WO 86/04919 ist ein Verfahren für die in-vitro Kultur von Pflanzenzellen bekannt welches darin besteht, daß man auf die Oberfläche des flüssigen Nährmediums frei bewegliche Schwimmkörper aufbringt und die Pflanzenbestandteile an der Oberfläche dieser Schwimmkörper kultiviert. Ferner ist ein Kulturgefäß mit zusätzlichen Vorrichtungen für den Zu- und Wegtransport von Flüssigkeiten oder Gasen, für deren Zirkulation im Gefäß, für die Regelung physikalischer und chemischer Größen offenbart.

EP-A-0 323 205 beschreibt eine Vorrichtung zur Applikation von Herbiziden mittels einer stabförmigen Anordung, auf der Sprühdüsen angebracht sind.

Das Testen von chemischen Stoffen oder Stoffgemischen (im folgenden wird der Einfachheit halber stets von einem Stoff gesprochen) auf ihre Wirksamkeit hin, speziell das Testen von potentiellen Pflanzenschutzmitteln (Pestizide) wie Insektizide, Fungizide, Herbizide, Nematozide, Akarizide und dergleichen, erfolgt heutzutage in der Regel derart, daß Pflanzen oder Pflanzenteile wie beispielsweise Ausschnitte von Blättern, mit dem zu testenden Stoff in Berührung gebracht werden. Sofern es nur darum geht festzustellen, ob der Stoff als solcher bereits zu einer Schädigung des Blattausschnitts führen kann (beispielsweise bei einem Herbizid), braucht der Blattausschnitt erst gar nicht mit einem Schädling, einem Pilz oder dergleichen infiziert zu werden; andernfalls muß der Blattausschnitt noch mit dem entsprechenden Schädling, Pilz oder dergleichen infiziert werden (beispielsweise wenn es sich bei dem Stoff um ein Fungizid oder Insektizid handelt). Nach einiger Zeit wird der Blattausschnitt auf die Wirksamkeit des aufgebrachten Stoffs hin untersucht.

In der Regel wird der zu testende Stoff auf den Blattausschnitt manuell aufpipettiert, bei ganzen Pflanzen in der Regel aufgesprüht. Da die Anzahl der Stoffe, die man auf ihre Wirksamkeit hin testen möchte, sehr groß ist und stetig und schnell wächst, ist das manuelle Aufpipettieren der einzelnen Stoffe zwar grundsätzlich möglich, aber insofern nur bedingt geeignet als es eben sehr aufwendig und zeitintensiv ist, sodaß die stetig wachsende Zahl von Stoffen, die man auf ihre Wirksamkeit hin testen möchte, auf diese Weise praktisch nicht zu bewältigen ist und den ständigen Einsatz von qualifiziertem Personal erfordert. Obendrein ist es auch schwierig, den Prüfling (z.B. Blattausschnitte, zerkleinerte Pflanzenteile, Samen oder ganze Pflanzen) gleichmäßig mit dem zu testenden Stoff zu benetzen, so daß eine zuverlässige Aussage über die Wirksamkeit eines Stoffs nur schwer möglich ist. Besprüht man mehrere Prüflinge, die benachbart zueinander angeordnet sind, mit unterschiedlichen Stoffen, so besteht überdies die Gefahr der Kontamination eines benachbarten Prüflings, sodaß hinterher unter Umständen die Wirkung des am benachbarten Prüfling getesteten Stoffs das Ergebnis beeinflußt bzw. sogar gänzlich verfälscht.

Es ist daher eine Aufgabe der Erfindung, ein Verfahren zum Testen von Pestiziden sowie ein Testsystem zur Durchführung dieses Verfahrens bereitzustellen, welches die vorstehend genannten Nachteile nicht aufweist, welches also insbesondere einen hohen Durchsatz zu testender Stoffe und zu testender Prüflinge zuläßt, gleichzeitig eine sichere Identifikation und Zuordnung der Prüflinge und der getesteten Stoffen erlaubt, bei dem ferner eine Kontamination benachbarter Prüflinge ausgeschlossen ist und welches zu einem möglichst hohen Grad automatisiert ist, damit es besonders effizient ist, also beispielsweise auch über Nacht und ohne Beaufsichtigung arbeiten kann.

Diese Aufgabe wird durch das erfindungsgemäße Verfahren sowie dessen Testsystem gelöst. Erfindungsgemäß wird daher ein Verfahren zum Testen von Pestiziden auf ihre Wirksamkeit hin, wobei das zu testende Pestizid auf einen Prüfling, speziell auf Pflanzen oder Pflanzenteile wie Ausschnitte von Blättern und dergleichen, aufgebracht wird und nach Ablauf einer vorgegebenen Zeitdauer der Prüfling auf die Wirksamkeit des Pestizids untersucht wird, vorgeschlagen, das dadurch gekennzeichnet ist, daß zunächst aus einem Vorrat von Prüflingen ein Typ eines Prüflings ausgewählt wird, und aus einem Vorrat von zu testenden Pestiziden die zu testenden Pestizide ausgewählt werden, daß dann mittels eines maschinenlesbaren Codes der ausgewählte Typ Prüfling und die ausgewählten Pestizide identifiziert (BC1, BC2) und diese Codes einer Speichereinheit (12) zugeführt werden, wobei die Prüflinge in einer Trägerplatte (30) bereitgestellt werden und zwar derart, daß die Prüflinge oder ein Ausschnitt (BR) der Prüflinge jeweils in eine in der Trägerplatte (30) vorgesehene und mit einer Nährlösung (301) bzw. einem Gel zumindest teilweise befüllte Vertiefung (300) hinein abgelegt werden und auf diese Weise die Trägerplatte bestückt wird, daß anschließend eine Sprüheinrichtung (150,151,158) entweder sich unmittelbar über die Vertiefung bzw. Vertiefungen (300) der Trägerplatte (30) positioniert und den dort abgelegten Prüfling mit dem ausgewählten Pestizid besprüht oder in die Vertiefung bzw. Vertiefungen (300) der Trägerplatte (30) eintaucht und den dort abgelegten Prüfling mit dem ausgewählten Pestizid besprüht und anschließend wieder aus der Vertiefung (300) heraus auftaucht.

Vorzugsweise handelt es sich bei den Pestiziden um Herbizide, Fungizide oder Insektizide.

Besonders bevorzugt ist diejenige Ausführungsform des erfindungsgemäßen Verfahrens bei der der Prüfling zunächst einer Stanzeinrichtung (2) zugeführt wird, die aus ihm einen Ausschnitt, wie beispielsweise eine Blattrondelle (BR), automatisch herausstanzt, diesen herausgestanzten Ausschnitt nach dem Ausstanzen festhält und ihn anschließend in eine mit Nährlösung (301) oder einem Gel zumindest teilweise befüllte Vertiefung (300) der Trägerplatte (30) hinein ablegt.

Ganz besonder bevorzugt ist diejenige Ausführungsform, bei der mehrere Stoffkonzentrate bzw. Stoffgemischkonzentrate in einem zweiten Einlaufspeicher (8) bereitgestellt werden, die jeweils in Vertiefungen einer Platte eingelagert sind, und daß eine Mischeinrichtung (13) vorgesehen ist zur Herstellung des auf den Prüfling aufzubringenden Stoffs bzw. des auf den Prüfling aufzubringenden Stoffgemischs aus dem in der jeweiligen Vertiefung enthaltenen Konzentrat und einer Hilfsmischung (11), und daß der so hergestellte Stoff bzw. das so hergestellte Stoffgemisch dann der Sprüheinrichtung (150,151,158) zugeführt wird.

Insbesondere handelt es sich bei dem Prüfling um eine ganze Pflanze.

Das erfindungsgemäße Testsystem zur Durchführung des Verfahrens ist dadurch gekennzeichnet, daß es
eine Speichereinheit (12), zur Speicherung der Prüflingstypen und der ausgewählten Pestizide mittels eines maschinenlesbaren Codes,
eine Trägerplatte (30), die derart ausgestaltet ist, daß die Prüflinge oder ein Ausschnitt (BR) der Prüflinge jeweils in eine in der Trägerplatte (30) vorgesehene und mit einer Nährlösung (301) bzw. einem Gel zumindest teilweise befüllte Vertiefung (300) hinein abgelegt werden können, und
eine Sprüheinrichtung (150,151,158), die sich entweder unmittelbar über die Vertiefung bzw. Vertiefungen (300) der Trägerplatte (30) positioniert und den dort abgelegten Prüfling mit dem ausgewählten Pestizid besprüht oder in die Vertiefung bzw. Vertiefungen (300) der Trägerplatte (30) eintaucht und den dort abgelegten Prüfling mit dem ausgewählten Pestizid besprüht und anschließend wieder aus der Vertiefung (300) heraus auftaucht, aufweist und bevorzugt einen ersten Einlaufspeicher (5), in welchem eine Vielzahl von mit Prüflingen bestückten Trägerplatten (30) vor dem Besprühen zwischengelagert wird, besitzt.

Bevorzugt ist dasjenige Testsystem bei dem die Sprüheinrichtung einen Düsenstock (150) umfaßt, der einen Dichtungsring (152) aufweist, welcher so angeordnet ist, daß er beim Eintauchen der Düse(n) (151) des Düsenstocks (150) in die jeweilige Vertiefung (300) der Trägerplatte (30) die Vertiefung (300) der Trägerplatte (30) dicht umschließt, und daß die Sprüheinrichtung ein Reservoir (156) für den auf den Prüfling aufzubringenden Stoff bzw. das auf den Prüfling aufzubringende Stoffgemisch aufweist sowie einen Sprühkanal (153), der an seinem dem Prüfling abgewandten Ende mit einem Druckluftanschluß versehen ist, wobei das Reservoir (156) und der Sprühkanal (153) durch einen sehr schmalen Zuführkanal (157) miteinander verbunden sind, der in den Sprühkanal (153) hinein mündet.

Besonders bevorzugt ist dasjenige Testsystem bei dem die Sprüheinrichtung eine oder mehrere Mikropipetten (158) umfaßt, welche jeweils einen Vorratsbehälter (160) aufweisen, in welchen der Stoff bzw. das Stoffgemisch zunächst gesaugt wird, und daß dann mit einem piezoelektrischen Tropfengenerator ein oder mehrere Tropfen einer wohldefinierten Größe und einer wohldefinierten Geschwindigkeit durch eine Düse (162) ausgetrieben werden und so der Prüfling besprüht wird.

Ferner ist eine Ausführungsform des Testsystems hervorzuheben, bei der der Düsenstock (150) mehrere zeilenförmig angeordnete Düsen und zugehörige Reservoirs sowie Sprüh- und Zuführkanäle sowie Dichtungsringe aufweist oder mehrere zeilenförmig angeordnete Mikropipetten (158), wobei der Abstand (D) zwischen den einzelnen Düsen bzw. Mikropipetten dem Abstand (E) der Vertiefungen (300) innerhalb einer Zeile der Trägerplatte (30) entspricht.

Insbesondere ist ein Testsystem bevorzugt, bei dem der Düsenstock (150) einen Zuluft- (154) und einen Abluftkanal (155) oder -kanäle umfaßt, welche jeweils so angeordnet sind, daß sie bei in die jeweilige Vertiefung (300) der Trägerplatte (30) eingetauchter Düse (151) mit der Vertiefung (300) kommunizierend in Verbindung stehen.

Besonders geeignet ist das erfindungsgemäße Testsystem zum Testen von Insektiziden, Fungiziden, Herbiziden, Akariziden oder Nematoziden insbesondere von Insektiziden, Fungiziden oder Herbiziden.

Das erfindungsgemäße Testsystem erlaubt insbesondere das Testen einer sehr großen Anzahl von Stoffen und Prüflingen und eine sichere Identifikation und Zuordnung der Prüflinge und der getesteten Substanzen. Darüberhinaus wird eine Kontamination benachbarter Prüflinge sicher vermieden und daher das Testergebnis nicht beeiflußt bzw. verfälscht. Weiterhin erlaubt das erfindungsgemäße Testsystem einen mehr oder weniger vollautomatischen Betrieb, insbesondere auch über Nacht und ohne Beaufsichtigung. Besonders vorteilhafte Ausgestaltungen des Testsystems sind Gegenstand der abhängigen Patentansprüche.

Im folgenden wird die Erfindung anhand der Zeichnung näher erläutert. Es zeigen, teilweise in schematischer Darstellung und/oder im Schnitt:
- Fig. 1: ein Blockschaltbild eines Ausführungsbeispiels des erfindungsgemäßen Testsystems mit Funktionsblöcken zur Erläuterung der prinzipiellen Funktionsweise des Testsystems,
- Fig. 2: ein Ausführungsbeispiel der Stanzeinrichtung des erfindungsgemäßen Testsystems kurz vor Beginn des Stanzvorgangs,
- Fig. 3: die Stanzeinrichtung der Fig. 2 beim Schneidevorgang,
- Fig. 4: die Stanzeinrichtung der Fig. 2 mit einem ausgestantzten Ausschnitt eines Blatts kurz vor dem Ablegen des Blatts in eine Vertiefung einer Trägerplatte,
- Fig. 5: die Stanzeinrichtung der Fig. 2 beim Ablegen des ausgestanzten Blattausschnitts,
- Fig. 6: ein Ausschnitt aus einem Ausführungsbeispiel der Sprüheinrichtung des erfindungsgemäßen Testsystems, wobei die Düse in die Vertiefung der Trägerplatte eingetaucht ist und die Sprüheinrichtung die Vertiefung abdichtet,
- Fig. 7: einen detaillierteren Ausschnitt des Düsenstocks,
- Fig. 8: ein weiteres Ausführungsbeispiel der Sprüheinrichtung des erfindungsgemäßen Testsystems (Mikropipette)
und
- Fig. 9: ein Ausführungsbeispiel eines Düsenstocks, bei dem die einzelnen Düsen entlang einer Zeile und über entsprechenden Vertiefungen einer Trägerplatte angeordnet sind.

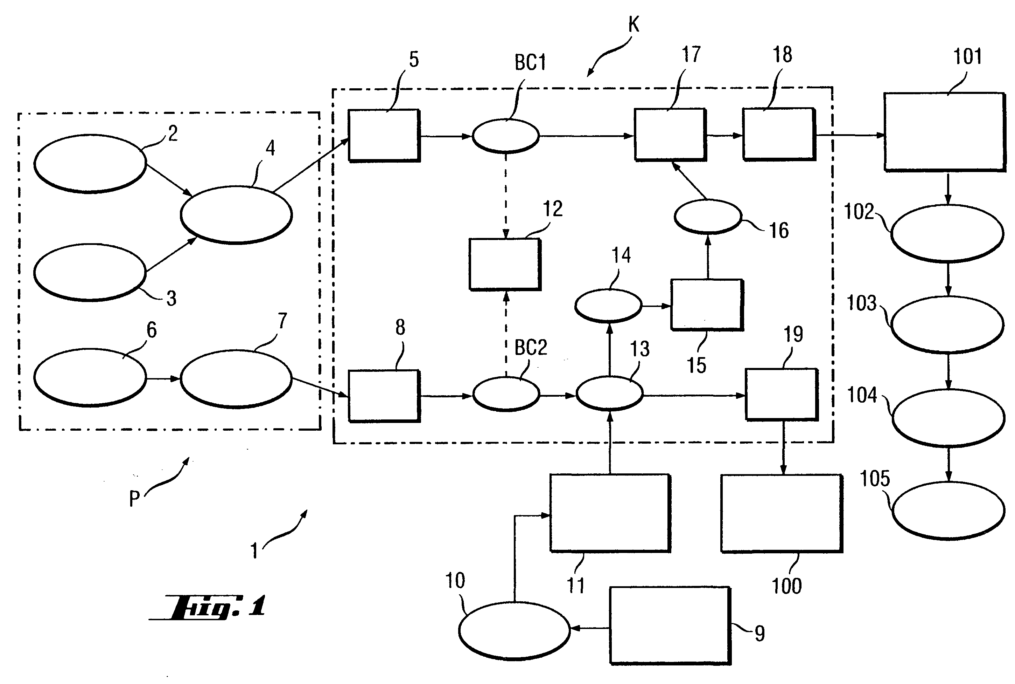

In dem Blockschaltbild in Fig. 1 erkennt man ein Ausführungsbeispiel des erfindungsgemäßen Testsystems, wobei die einzelnen Funktionsblöcke nicht notwendigerweise auch alle einzeln körperlich realisiert sein müssen; dieses Blockschaltbild dient in erster Linie dazu, die Funktionsweise des erfindungsgemäßen Testsystems übersichtlich darzustellen. Einzelne Komponenten des Testsystems werden weiter unten noch im Detail erläutert.

Grundsätzlich ist das in Fig. 1 dargestellte und gesamthaft mit 1 bezeichnete Ausführungsbeispiel des Testsystems in zwei wesentliche Bereiche unterteilt - einen Peripheriebereich P, in welchem ein Operator noch manuelle Eingriffsmöglichkeiten hat und einen Kernbereich K, in welchen der Operator beim Betrieb keinerlei Eingriffsmöglichkeiten mehr hat, in welchem also alle Aktionen vollautomatisch ablaufen. Diese Unterteilung in einen Peripheriebereich P und einen Kernbereich K wird weiter unten anhand der einzelnen Aktionen, die in den einzelnen Bereichen ablaufen, noch etwas detaillierter erläutert - sie ist eine besonders praktische Unterteilung, allerdings ist eine derartige Unterteilung für die grundsätzliche Funktionsweise nicht zwingend erforderlich. Je nach Einsatzgebiet kann auch eine andere Unterteilung sinnvoll sein.

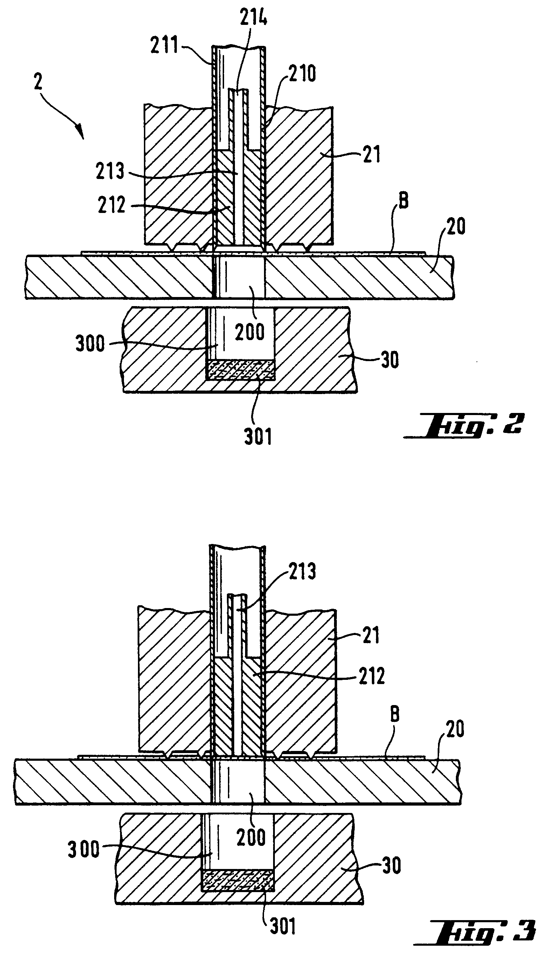

Im Peripheriebereich P wird in einer Stanzeinrichtung 2 aus einem Blatt eine Blattrondelle herausgestanzt (oder es werden mehrere Blattrondellen gleichzeitig herausgestanzt) und anschließend in eine Vertiefung einer Trägerplatte, beispielsweise einer Mikrotiterplatte, hinein abgelegt. Wie dieses Ausstanzen erfolgen kann wird anhand der Fig. 2-6 noch genauer erläutert werden. Damit die abgelegte Blattrondelle ausreichend mit Nahrung versorgt wird, sind die einzelnen Vertiefungen der Mikrotiterplatten mit einer Nährlösung befüllt, die z.B. mittels eines Algenextrakts, welches gemeinhin unter dem Namen AGAR bekannt ist, zu einem Gel verdickt sein kann. In die so befüllte Vertiefung hinein wird die Blattrondelle abgelegt. Da die Nährlösung bzw. das Gel bei Raumtemperatur nicht flüssig ist, findet beim Befüllen der einzelnen Vertiefungen gemäß Schritt 3 in Fig. 1 vor dem Einfüllen eine Erwärmung statt, damit der Aggregatzustand kurzzeitig zum Einfüllen in die Vertiefungen flüssig ist. Die auf diese Weise bestückte Mikrotiterplatte wird dann in einem Schritt 4 einem ersten Eingabespeicher 5 zugeführt, der hier Bestandteil des Kernbereichs K des Testsystems 1 ist.

Dieser erste Eingabespeicher 5 dient insbesondere dazu, daß stets eine ausreichende Anzahl bestückter Mikrotiterplatten (Trägerplatten) zur Verfügung steht, damit ein kontinuierlicher Betrieb im Kernbereich gegeben ist und somit das Testsystem effizient genutzt wird. Dies heißt auch, daß beispielsweise am Abend so viele bestückte Mikrotiterplatten dem ersten Eingabespeicher 5 zugeführt werden, daß ein vollautomatischer Betrieb im Kernbereich K des Testsystems über Nacht und ohne Beaufsichtigung möglich ist. Die einzelnen bestückten Mikrotiterplatten sind mit einem maschinenlesbaren Code versehen. Dieser Barcode repräsentiert hier beispielsweise eine fortlaufende Nummerierung der einzelnen Mikrotiterplatten, man kann also einfache Barcode-Etiketten mit laufender Nummerierung verwenden und muß nicht für jede Mikrotiterplatte ein spezielles Etikett herstellen. In einer Datenbank (nicht dargestellt, z.B. ORACLE-Datenbank) ist dann eine entsprechende Information abgelegt, welcher Typ Prüfling sich in der Mikrotiterplatte mit welcher Laufnummer befindet. In aller Regel ist es so (aber nicht zwingend), daß in den Vertiefungen von ein und derselben Mikrotiterplatte nur ein Typ Prüfling vorhanden ist. Aufgrund der in der Datenbank abgelegten Information ist also eine eindeutige Zuordnung zwischen dem gelesenen Barcode und dem Prüflingstyp möglich.

Das Testsystem 1 weist in seinem Kernbereich K außer dem ersten Eingabespeicher 5 für die Prüflinge noch einen zweiten Eingabespeicher 8 auf. Diesem zweiten Eingabespeicher 8 werden Stoffkonzentrate zugeführt, die in einem Schritt 6 in einem maschinell handhabbaren Behälter wie beispielsweise einer "Deep-Well-Plate" (DWP) oder - je nach Substanzmenge - in einer Mikrotiterplatte (MTP) angeliefert werden. Diese dem Kernbereich K zugeführte Deep-Well-Plate wird im folgenden als "Tochterplatte" bezeichnet. Die in den Tochterplatten von der Logistik angelieferten Stoffkonzentrate, diese können in einem Lösungsmittel wie beispielsweise Dimethylsulfoxid (im folgenden kurz DMSO genannt), Aceton oder N,N-Dimethylformamid oder deren Gemische, vorzugsweise DMSO gelöste Aktivsubstanzen sein, sollen jedoch in der Regel nicht in der hochkonzentrierten Form auf die in den Vertiefungen der Trägerplatten bereitgestellten Blattrondellen gesprüht werden, sondern es ist bevorzugt, das jeweilige Stoffkonzentrat durch Zumischen von Formulierungshilfsmitteln wie Tenside sowie Wasser zu einer geeigneten Spritzbrühe - diese Spritzbrühe ist dann der eigentlich auf die Blattrondelle aufzusprühende (und damit der zu testende) Stoff - zu verarbeiten.

Die Herstellung der Tochterplatten erfolgt in der Logistik. Dort werden von sogenannten "Mutterplatten", daß sind maschinell handhabbaren Behälter wie beispielsweise eine "Deep-Well-Plate" (DWP) oder - je nach Substanzmenge - Mikrotiterplatte (MTP), in deren Vertiefungen in der Regel mehr als eine Dosis eines Stoffkonzentrats enthalten sind, mehrere "Tochterplatten" hergestellt. Zur Herstellung einer Tochterplatte wird aus einer Vertiefung der Mutterplatte die zur Herstellung einer einzigen Dosis der Spritzbrühe benötigte Menge Konzentrat (Aktivsubstanz in organischem Lösungsmittel wie beispielsweise DMSO gelöst) entnommen und in die entsprechende Vertiefung der Tochterplatte eingefüllt. Die Tochterplatten entsprechen daher im Prinzip der Mutterplatte mit dem Unterschied, daß in den Vertiefungen der Tochterplatte bereits die zur Herstellung einer Dosis der Spritzbrühe (also des zu testenden Stoffs) benötigte Menge genau enthalten ist, während in den entsprechenden Vertiefungen der Mutterplatte jeweils ein Vielfaches dieser Menge enthalten ist.

Beim Transport von der Logistik zum Testsystem werden die Tochterplatten mit den Stoffkonzentraten gewünschtenfalls gekühlt, beispielsweise mit CO₂- Schnee, sodaß die Konzentrate fest sind um eine Kontamination benachbarter Vertiefungen zu vermeiden. Darüberhinaus sind die Vertiefungen der Tochterplatte, in denen die Stoffkonzentrate enthalten sind, üblicherweise zur Vermeidung von Kontaminationen verschlossen. Eine gebräuchliche Art des Verschließens ist dabei die Versiegelung mit einer Abdeckfolie die gewünschtenfalls mit der Tochterplatte verklebt, hitzeverschweißt oder ultraschallverschweißt werden kann oder mit einer sogenannten "Cap-Mat", einer mit vielen einzelnen Stopfen (zum Verschließen der Vertiefungen) versehenen Abdeckung. In einem Schritt 7 wird der Zugriff auf die einzelnen Stoffkonzentrate in den Vertiefungen ermöglicht. Dies kann beispielsweise so erfolgen, daß entweder die Cap-Map oder die Abdeckfolie entfernt wird oder die Abdeckfolie nicht entfernt wird, sondern erst später im Kernbereich K mit einer Pipettiernadel durchstochen wird. Dabei muß darauf geachtet werden, daß es zu keinen Kontaminationen kommen kann.

Die Tochterplatte mit den Stoffkonzentraten wird in dem Schritt 7 nicht nur geöffnet, sondern auch dem zweiten Eingabespeicher 8 zugeführt. Der zweite Eingabespeicher 8 dient insbesondere dazu, daß stets eine ausreichende Anzahl Stoffkonzentrate enthaltende Tochterplatten zur Verfügung steht, damit ein kontinuierlicher Betrieb im Kernbereich K gegeben ist und somit das Testsystem effizient genutzt wird. Dies heißt auch, daß beispielsweise am Abend so viele Tochterplatten mit Stoffkonzentraten dem zweiten Eingabespeicher 8 zugeführt werden, daß ein vollautomatischer Betrieb im Kernbereich K des Testsystems über Nacht und ohne Beaufsichtigung möglich ist. Die einzelnen Tochterplatten mit den Stoffkonzentraten sind jeweils mit einem maschinenlesbaren Code (Barcode) versehen. Dieser Barcode kann wieder eine laufende Nummer repräsentieren. In der Datenbank ist dann eine Information abgelegt, die Aufschluß darüber gibt, welches Stoffkonzentrat (bzw. welche Stoffkonzentrate) die Tochterplatte mit welcher Laufnummer enthält.

Während die Stoffkonzentrate (in Lösungmitteln gelöste Aktivsubstanzen) von der Logistik in Tochterplatten bereitgestellt werden, erfolgt die Herstellung der Spritzbrühe, die den zu testenden Stoff enthält, bei dem hier beschriebenen Ausführungsbeispiel des Testsystems innerhalb des Kernbereichs K. Die Bereitstellung der einzelnen Formulierungshilfstoffe, die für die Spritzbrühe benötigt werden, erfolgt hingegen nicht innerhalb des Kernbereichs K, sondern in einem Schritt 9. Ähnliches gilt für das Mischen dieser Formulierungshilfstoffe zur Herstellung der Spritzbrühe, was in einem Schritt 10 geschieht. Schließlich wird die fertige Spritzbrühe in einem Schritt 11 bereitgestellt, so daß innerhalb des Kernbereichs K dann automatisch auf die fertige Spritzbrühe zugegriffen werden kann.

Im Kernbereich K funktioniert das Testsystem nun wie folgt: Falls die Trägerplatten mit den Blattrondellen bzw. Pflanzen in der gleichen Reihenfolge verwendet werden sollen wie sie dem ersten Eingabespeicher 5 zugeführt worden sind (first-in-first-out), entfällt eine Auswahl einer bestimmten Trägerplatte aus dem gesamten Vorrat von Trägerplatten, der im ersten Eingabespeicher 5 zwischengelagert ist. Will man hingegen eine Trägerplatte mit einem bestimmten Typ von Prüflingen verwenden, so wird zunächst aus dem Vorrat von Trägerplatten im ersten Eingabespeicher 5 die betreffende Trägerplatte ausgewähit. Das Auffinden der Trägerplatte kann derart erfolgen, daß die Barcodes, mit denen die Trägerplatten versehen sind, gelesen werden und mittels der in der Datenbank abgelegten Information die betreffende Trägerplatte auf diese Weise gefunden wird ("Lagerverwaltung"). Der Barcode der Trägerplatte, die verwendet wird, wird dann in einem Schritt BC1 abgelesen und einer Speichereinheit 12 zugeführt.

In gleicher Weise erfolgt die Auswahl der Tochtterpiatten mit den die Stoffe enthaltenden Spritzbrühen, sofern die Tochterplatten nicht in der gleichen Reihenfolge verwendet werden sollen wie sie dem zweiten Eingabespeicher 8 zugeführt worden sind (first-in-first-out). Anschließend wird in einem Schritt BC2 der Barcode der verwendeten Tochterplatte abgelesen und der Speichereinheit 12 zugeführt.

Wie oben bereits erläutert ist, sollen aber die Stoffkonzentrate im Normalfall nicht direkt auf die Blattrondellen gesprüht werden, sondern es soll mittels der Formulierungshilfsstoffe zunächst eine Spritzbrühe - der tatsächlich zu testende Stoff - hergestellt werden. Es wird dann in einem Schritt 13 in die Vertiefungen der Tochterplatten noch die erforderliche Menge an Formulierungshilfsstoff einpipettiert und damit die Spritzbrühen - die zu testenden Stoffe - hergestellt. Gegebenenfalis werden die Tochterplatten noch gerüttelt zum Erreichen einer guten Durchmischung der Spritzbrühen in den jeweiligen Vertiefungen.

Die Durchmischung kann auf verschiedene Art erfolgen, beispielsweise durch einen Hochfrequenz-Schüttler, mittels einer Ultraschalleinrichtung, oder mit Hilfe eines Verwirbelungsgeräts ("Vortexer").

Nachdem die Herstellung der Spritzbrühe im Schritt 13 abgeschlossen ist, muß die Spritzbrühe nun der Sprüheinrichtung zugeführt werden. Dies erfolgt in einem Schritt 14, in welchem beispielsweise ein Pipettierroboter aus den einzelnen Vertiefungen die Spritzbrühen entnimmt, der Sprüheinrichtung zuführt und sie dort beispielsweise in einem Düsenstock der Sprüheinrichtung ablegt. Dies erfolgt in einem Schritt 15. Wie dies im Detail erfolgen kann, wird weiter unten noch erläutert. Anschließend werden in einem Schritt 16 die Spritzbrühen auf die Blattrondellen bzw. Pflanzen in den Vertiefungen aufgesprüht.

Die Trägerplatten, in deren Vertiefungen sich die besprühten Blattrondellen bzw. Pflanzen befinden, man spricht im Falle von Trägerplatten mit besprühten Blattrondellen von "Testplatten", werden dann in einem Schritt 17 einem ersten Ausgabespeicher 18 zugeführt. Dort können die besprühten Blattrondellen trocknen, nötigenfalls kann diese Trocknung durch eine Belüftung unterstützt werden. Falls es erforderlich oder gewünscht ist, kann auch vor dem Zuführen der Testplatte mit den besprühten Blattrondellen in den ersten Ausgabespeicher 18 eine Versiegelung der Testplatte oder zumindest der einzelnen Vertiefungen erfolgen. Die Tochterplatten mit den leeren Vertiefungen werden einem zweiten Ausgabespeicher 19 zugeführt.

Die nun folgenden Schritte werden bei dem hier beschriebenen Ausführungsbeispiel nicht mehr im Kernbereich K des Testsystems durchgeführt. Dies betrifft einerseits die Entsorgung bzw. Rückführung oder Weiterbehandlung der Tochterplatten, was in einem Schritt 100 erfolgt. Zum anderen betrifft dies die Weiterbehandlung der Testplatten. Diese werden in einem Schritt 101 aus dem Ausgabespeicher entnommen und - falls es sich bei den Teststoffen um Insektizide oder Fungizide handelt - in einem Schritt 102 z.B. mit Insekten versehen oder mit Pilzsporen kontaminiert (Alternativ könnten die Blattrondellen auch schon vor dem Besprühen mit der Spritzbrühe - also vor dem Besprühen mit dem zu testenden Stoff - mit Insekten versehen oder mit Pilzsporen kontaminiert worden sein). Anschließend erfolgt eine Inkubation 103 der Testplatten mit den infizierten Blattrondellen und nach Ablauf einer vorbestimmten Zeitspanne wird dann eine Auswertung 104 vorgenommen, gegebenenfalls werden weitere Mengen Stoffkonzentrationen in einem Schritt 105 nachbestellt, um bereits gewonnene Ergebnisse erhärten zu können.

Im folgenden sollen nun einzelne Schritte bzw. Einrichtungen, die teilweise im Peripheriebereich P, teilweise im Kernbereich K durchgeführt werden bzw. dort angeordnet sind, anhand von Ausführungsbeispielen näher erläutert werden.

In den Fig. 2-5 ist ein Ausschnitt eines Ausführungsbeispiel der Stanzeinrichtung 2 zu erkennen, wobei die einzelnen Teile der Stanzeinrichtung in unterschiedlichen Betriebsstellungen dargestellt sind. Die Stanzeinrichtung 2 umfaßt eine Auflageplatte 20, die eine hier kreisförmige Öffnung 200 aufweist. Ferner umfaßt die Stanzeinrichtung einen Niederhalter 21, der in seinem Inneren eine zylindrische Führung 210 aufweist. In dieser Führung 210 ist eine ringförmige Schneide 211 angeordnet, die in Längsrichtung der zylindrischen Führung 210 verschiebbar ist. Im Inneren der ringförmigen Schneide 211 ist ein Auswerfer 212 angeordnet, der in Längsrichtung der Schneide 211 (axial) verschiebbar ist. Der Auswerfer 212 selbst weist einen durchgehenden Druck-/Saugkanal 213 auf, der an seinem der Auflageplatte 20 abgewandten Ende 214 an eine Überdruck- bzw. Unterdruckquelle (nicht dargestellt) angeschlossen ist.

In Fig. 2 ist die Stanzeinrichtung 2 in einem Betriebszustand kurz vor Beginn des Stanzvorgangs dargestellt. Der zu stanzende Prüfling, z.B. ein Blatt B, ist bereits auf die Auflageplatte 20 aufgelegt und wird mittels des Niederhalters 21 festgehalten. Unterhalb der Öffnung 200 ist eine Vertiefung 300 einer Mikrotiterplatte 30 (Trägerplatte) angeordnet, in der sich gemäß Schritt 3 (Fig. 1) bereits einen Nährlösung 301 befindet.

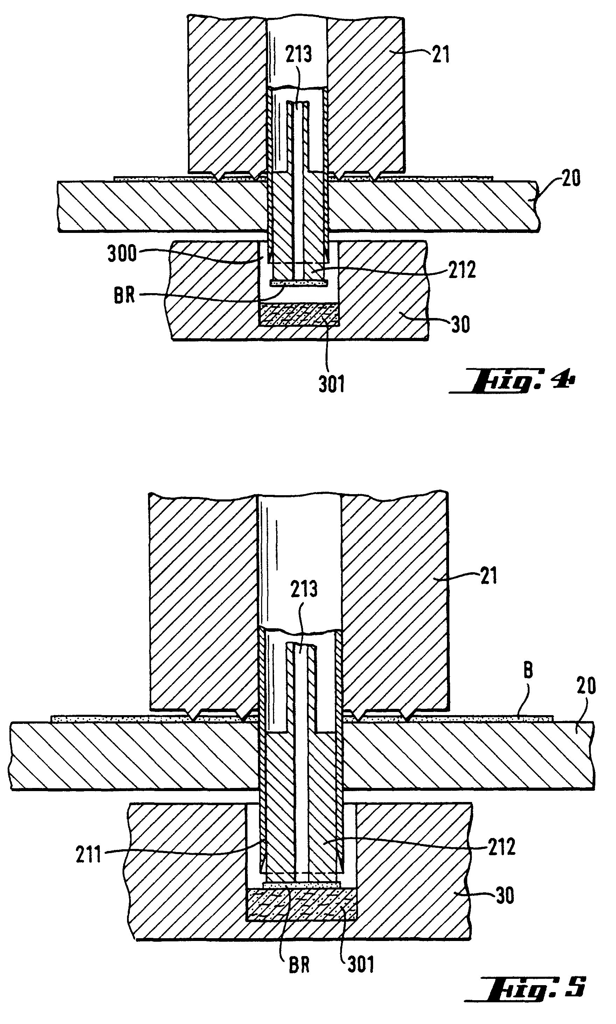

In Fig. 3 ist die Stanzeinrichtung 2 während des Schneidevorgangs dargestellt. Die Schneide 211 befindet sich in Kontakt mit dem Blatt B und der Auswerfer 212 ebenfalls. Der Ansaugkanal 213 ist dabei mit Unterdruck beaufschlagt, so daß die geschnittene Blattrondelle nicht durch die Öffnung 200 in die Vertiefung 300 herabfallen kann, sondern später wohldefiniert dort abgelegt werden kann.

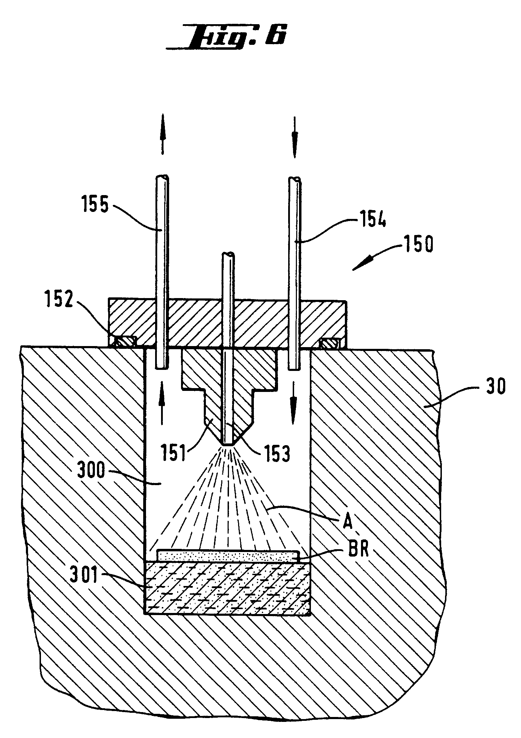

In Fig. 4 ist die Stanzeinrichtung mit einem ausgestanzten Ausschnitt eines Blatts, also mit der Blattrondelle BR, kurz vor dem Ablegen der Blattrondelle auf die Nährlösung 301 (bzw. das Gel), die sich in der Vertiefung 300 der Trägerplatte 30 befindet. Durch den Unterdruck im Ansaugkanal 213 wird die Blattrondelle BR am Auswerfer 212 festgehalten.

In Fig. 5 schließlich ist die Stanzeinrichtung beim Ablegen der Blattrondelle BR auf die Nährlösung 301 (bzw. das Gel) dargestellt. Dabei wird der Ansaugkanal 213 mit einer Überdruckquelle verbunden, um einen leichten Überdruck im Ansaugkanal 213 zu erzeugen, da dies das Ablösen der Blattrondelle BR vom Auswerfer 212 erleichtert. Nach dem Ablagen wird die Stanzeinrichtung wieder in die Ausgangsstellung gebracht, sodaß das nächste Blatt B auf die Auflageplatte 20 gelegt werden kann bzw. das eben gestanzte Blatt B auf der Auflageplatte 20 verschoben werden kann, damit die nächsten Blattrondellen ausgestanzt werden können. Allerdings wird hierzu natürlich die Öffnung 200 der Auflageplatte mit der nächsten Vertiefung der Trägerplatte zur Deckung gebracht. Der Stanzvorgang kann dann erneut durchgeführt werden und auf diese Weise kann die gesamte Trägerplatte 30 bestückt werden.

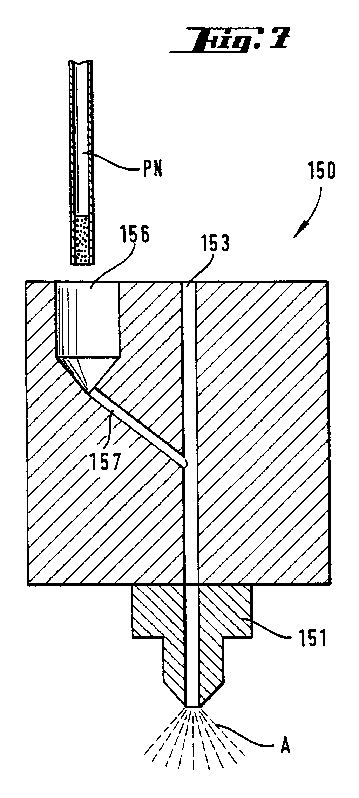

In Fig. 6 ist ein Ausschnitt aus einem Ausführungsbeispiel der Sprüheinrichtung gemäß dem Schritt 15 in Fig. 1 dargestellt. Eine Düse 151 eines Düsenstocks 150 bei dieser Darstellung bereits in die Vertiefung 300 der Trägerplatte 30 eingetaucht, in welcher sich die Blattrondelle BR auf der Nährlösung 301 befindet. Mittels eines Dichtungsrings 152 ist die Vertiefung 300 abgedichtet, so daß benachbarte Vertiefungen der Trägerplatte beim Besprühen der Blattrondelle mit dem zu testenden Stoff durch den Sprühkanal 153 der Düse 151 nicht kontaminiert werden. Der zu testende Stoff - die Spritzbrühe - wird in der Regel in Form eines Sprühnebels A (Aerosol) auf die Blattrondelle appliziert. Da oftmals nach dem Besprühen noch Sprühnebel in der Vertiefung 300 zurückbleibt und dieser Sprühnebel später in benachbarten Vertiefungen abgelegte Blattrondellen kontaminieren könnte, ist der Düsenstock 150 noch mit einem Zuluftkanal 154 und einem Abluftkanal 155 versehen. Noch zurückbleibende Reste des Sprühnebels werden nach dem Applizieren mittels Zuführen von Frischluft und Abführen von Spritzbrühenaerosol aus der Vertiefung 300 herausgespült und abgeführt, und zwar noch bevor der Düsenstock 150 von der Trägerplatte 30 abgehoben wird. Dadurch werden Kontaminationen von in benachbarten Vertiefungen abgelegten Blattrondellen zuverlässig vermieden.

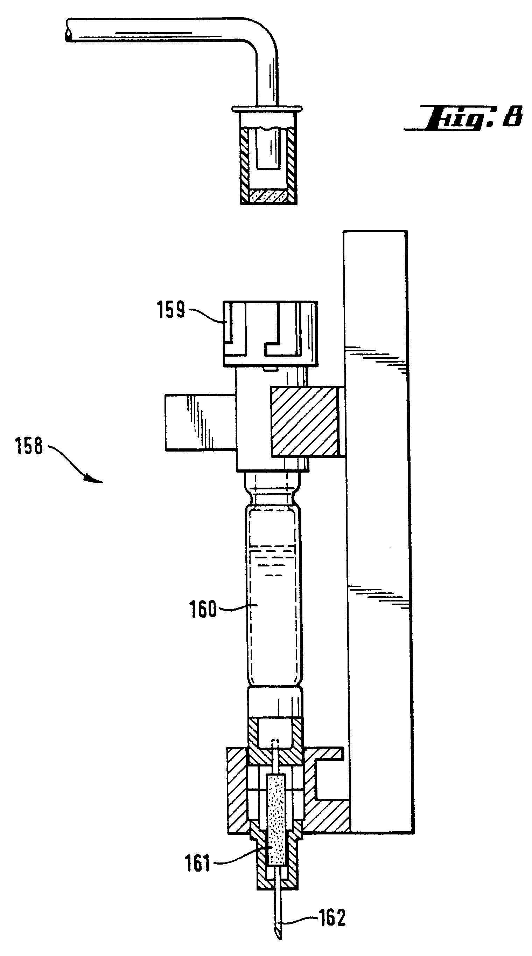

In Fig. 7 ist ein detaillierterer Ausschnitt des Düsenstocks 150 dargestellt. Hier erkennt man insbesondere, daß die aus einer Vertiefung einer Tochterplatte entnommene fertige Spritzbrühe - der zu testende Stoff (typischerweise eine Menge von etwa 10-100 Mikroliter) - mittels einer Pipettiernadel PN in ein Reservoir 156 einpipettiert wird. Das Reservoir 156 ist mit dem Sprühkanal 153 über einen Zuführkanal 157 mit sehr geringem Durchmesser verbunden. Dieser Durchmesser ist so gering, daß ohne Ansaugen der Spritzbrühe diese nicht in den Sprühkanal 153 gelangt. Dieses Ansaugen der Spritzbrühe erfolgt derart, daß das der Blattrondelle abgewandte Ende des Sprühkanals 153 mit einem Druckluftanschluß versehen ist. Sobald Druckluft durch den Sprühkanal 153 strömt, wird im Zuführkanal 157 nach dem Venturi-Prinzip ein Unterdruck erzeugt, der die Spritzbrühe aus dem Reservoir 156 heraussaugt und durch den Zuführkanal 157 dem Luftstrom im Sprühkanal 153 beimischt, wodurch das Gemisch aus zu testendem Stoff und Luft erzeugt wird, das als Aerosol A auf die Blattrondelle aufgesprüht wird. Die Düse 151 kann als Vollkreiskegeldüse ausgebildet sein, damit eine homogene Besprühung der Blattrondelle erfolgt.

Der Düsenstock kann auch derartig ausgebildet sein, daß das Reservoir (156) mit dem Zuführkanal (157) senkrecht über der Düse (151) angebracht ist und die Druckluft über den Sprühkanal (153) seitlich zugeführt wird.

Die Druckluftzufuhr kann sowohl kontinuierlich als auch diskontinuierlich (d.h. Zufuhr nur unmittelbar vor der Applikation der Spritzbrühe) erfolgen. Bevorzugt ist eine kontinuierliche Zufuhr der Druckluft.

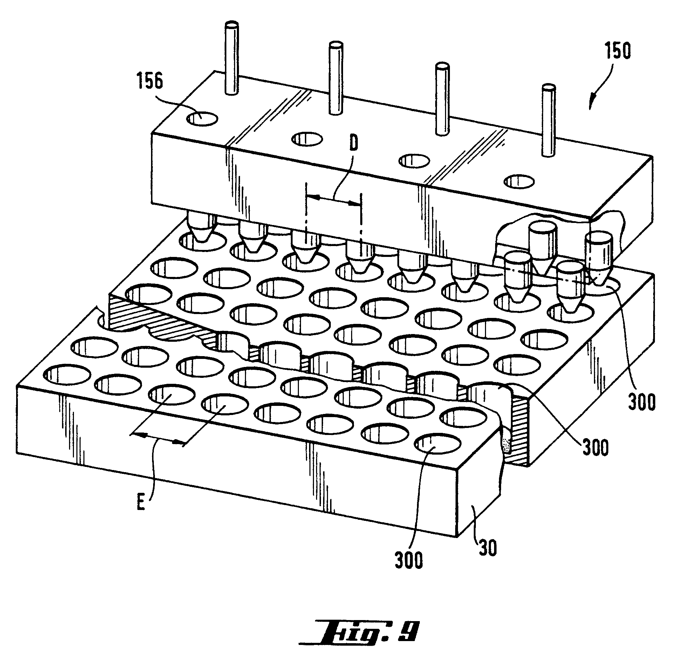

Andere Mittel zum Aufbringen der Spritzbrühe - welche den zu testenden Stoff enthält - auf die Blattrondelle sind in Fig. 8 dargestellt. Bei diesen Mitteln handelt es sich im wesentlichen um Mikropipetten 158, die mit Hilfe von piezoelektrischen Transducern feinste Tröpfchen erzeugen, die in ihrer Größe sehr genau steuerbar sind und die außerordentlich zielgenau auf die Blattrondelle aufgesprüht werden können. Das Funktionsprinzip solcher Mikropipetten ist ähnlich der Art und Weise des Ausbringens der Tinte bei Tintenstrahldruckern. Mit der in Fig. 8 dargestellten Mikropipette 158 kann zunächst durch Anlegen von Unterdruck am Druck-/Sauganschluß 159 (der mit einem Bajonettverschluß versehen ist) die Spritzbrühe aus der Vertiefung der Tochterplatte in den Vorratsbehälter 160 gesaugt werden. Anschließend wird die Mikropipette in die Vertiefung der Trägerplatte abgesenkt, in der sich die zu besprühende Blattrondelle befindet. Mit Hilfe eines piezoelektrischen Tropfengenerators 161 (der beim Anlegen einer elektrischen Steuerspannung einen entsprechenden Ultraschallpuls erzeugt) werden dann Tropfen einer wohldefinierten Größe mit einer wohldefinierten Geschwindigkeit aus einer Düse 162 ausgetrieben. Werden solche Mikropipetten eingesetzt, so erübrigt sich die Erzeugung eines Spritzbrühenaerosols, da mit Hilfe solcher Mikropipetten eine genügend feine Tröpfchengröße erzeugt werden kann und die Tröpfchen darüberhinaus auch noch sehr zielgenau ausgebracht werden können, sodaß mit Hilfe solcher Pipetten auch die optimale Tröpfchengröße für einen bestimmten Stoff (Spritzbrühe) ermittelt werden kann. Der Düsenstock 150 kann also auch solche Mikropipetten umfassen als Variante zum Ausführungsbeispiel gemäß Fig. 7. Derartige Mikropipetten und die zugehörigen Systemkomponenten (Ansteuereineheit) sind bei der Firma Microdrop GmbH in Norderstedt (Bundesrepublik Deutschland) erhältlich unter dem Namen "Autodrop-System".

Ein weiteres geeignetes Mittel zum Applizieren der Spritzbrühe auf den Prüfling ist ein Ultraschall-Flüssigkeitszerstäuber, welcher mit einer auf einen Metallkonus aufgeklebter Piezo-Keramikscheibe arbeitet, die zu Hochfrequenzschwingungen im kHz-Bereich (beispielsweise 100 kHz) angeregt wird. Derartige Mittel sind kommerziell erhältlich.

Gwünschtenfalls kann als Mittel zum Applizieren der Spritzbrühe auf den Prüfling auch ein handelsüblicher Pumpzerstäuber verwendet werden, wie er beispielsweise in der Kosmetikindustrie für Parfümflaschen verwendet wird. Pumpzerstäuber eignen sich besonders für Prüflinge in Form von Blattrondellen oder zerkleinerten Pflanzenteilen.

In Fig. 9 schließlich ist ein Ausführungsbeispiel eines Düsenstocks 150 dargestellt, bei dem die einzelnen Düsen (entsprechendes gilt für die Mikropipetten) entlang einer oder mehreren Zeilen angeordnet sind. Der Abstand D zwischen den einzelnen Düsen entspricht dabei dem Abstand E zwischen den Vertiefungen 300 der Trägerplatte 30 (z.B. mit vierundzwanzig oder sechsundneunzig Vertiefungen), in denen sich die Blattrondellen befinden. Bei dem Ausführungsbeispiel in Fig. 9 sind an dem Düsenstock 150 zwei Zeilen mit jeweils acht Düsen pro Zeile vorgesehen. Jeweils einer Vierergruppe von Düsen (siehe Ausschnitt aus dem Düsenstock am rechten Rand des Düsenstocks) ist bei diesem Ausführungsbeispiel ein Reservoir 156 zugeordnet (also existieren vier Zuführkanäle von diesem Reservoir zu den jeweiligen Sprühkanälen) sowie ein Druckluftanschluß (also existieren vier Verbindungen von diesem Druckluftanschluß zu den Sprühkanälen). Der Düsenstock wird getaktet über die Trägerplatte 30 bewegt, abgesenkt, es wird jeweils gleichzeitig Spritzbrühe auf die Blattrondellen in den Vertiefungen von zwei Zeilen der Trägerplatte aufgebracht (wobei auf vier Blattrondellen jeweils die gleiche Spritzbrühe aufgebracht wird, diese vier gleichartig besprühten Blattrondellen bezeichnet man auch als Replika), es werden die Vertiefungen gespült, der Düsenstock wieder angehoben, und so weiter.

Es ist auch denkbar, daß anstelle der Blattrondellen, die in die einzelnen Vertiefungen der Trägerplatte hinein abgelegt werden, ein ganzes Blatt oder ein größerer Ausschnitt davon auf eine Trägerplatte aufgebracht wird, die nicht eine solche Vielzahl von Vertiefungen aufweist, sondern beispielsweise nur eine einzige entsprechend großflächige, aber dafür nicht sehr tiefe Vertiefung aufweist und somit so ausgebildet ist, daß das Blatt oder ein größerer Ausschnitt davon auf einer Nährlösung bzw. einem Gel bereitgestellt werden kann. Speziell mit dem oben beschriebenen "Autodrop-System" der Firma Microdrop GmbH in Norderstedt (Bundesrepublik Deutschland) ist nämlich - wie bereits erwähnt - ein sehr zielgenaues Aufbringen der zu testenden Stoffe möglich, sodaß es praktisch zu keinen Kontaminationen kommen kann, wenn die benachbarten Punkte, die besprüht werden, nur einen entsprechenden Mindestabstand voneinander haben. An die Stelle der Trägerplatte mit den vielen einzelnen Vertiefungen mit den einzelnen Blattrondellen tritt dann einfach eine Trägerplatte mit einem ganzen Blatt oder einem größeren Ausschnitt davon. Die einzelnen Punkte, an denen dann die zu testenden Stoffe aufgebracht werden, müssen einfach so weit voneinander entfernt sein, daß es bei dem sehr zielgenauen Aufbringen der zu testenden Stoffe zu keinen Kontaminationen benachbarter Punkte kommen kann, was aber prinzipiell sehr gut möglich ist.

In einer bevorzugten Ausführungsform des erfindungsgemäßen Testsystems positioniert sich eine Sprüheinrichtung (150,151,158) unmittelbar über die Vertiefung bzw. Vertiefungen (300) der Trägerplatte (30) und besprüht den dort abgelegten Prüfling mit dem ausgewählten Stoff bzw. dem ausgewählten Stoffgemisch. Bei dieser Ausführungsform kann die Kontamination von benachbarten Prüflingen durch direkten Kontakt mit Sprühnebel verhindert werden, indem man den Winkel des Sprühstrahls beispielsweise durch ein geeignetes Vorsatzstück auf den freien Durchmesser einer Vertiefung (300) begrenzt.

Ein derartiges Vorsatzstück für die Sprüheinrichtung (150,151,158) besitzt vorteilhafterweise den freien Querschnitt einer Vertiefung (300), kann aber auch einen geringeren freien Querschnitt aufweisen. Das Vorsatzstück kann mit der Sprüheinrichtung (150,151,158) fest oder beweglich verbunden sein oder unmittelbar vor dem Besprühen durch eine geeignete Haltevorrichtung über die Vertiefungen (300) positioniert werden. Ein Vorsatzstück dieser Art besitzt beispielsweise die Form eines Tubus, dessen Länge so zu wählen ist, das der Winkel des Sprühstrahls von den Wänden des Tubus auf den freien Querschnitt der Vertiefung (300) begrenzt wird. Wenn es sich bei dem Prüfling um Blattrondellen handelt, ist vorzugsweise das Vorsatzstück mit der Sprüheinrichtung (150,151,158) fest oder beweglich verbunden.

Es ist auch möglich, das Vorsatzstück vor dem Besprühen direkt auf die Trägerplatte (30) zu setzen. Bei dieser Ausführungsform des erfindungsgemäßen Testsystems liegt das Vorsatzstück bevorzugt in Form eines dreidimensionalen Gitters vor, dessen Länge und Breite der der Trägerplatte (30) und dessen Anzahl an Maschen der Anzahl der Vertiefungen (300) auf der Trägerplatte entspricht, wobei der Mittelpunkt der Maschen jeweils über dem Mittelpunkt der Vertiefungen (300) liegt, sodaß die Wandhöhe der Maschen eine Verlängerung der Wandhöhe der Vertiefungen (300) darstellt. Vorzugsweise besitzen die Maschen die freie Öffnung der Vertiefungen (300).

Die Verwendung eines dreidimensionalen Gitters ist besonders vorteilhaft, wenn es sich bei dem Prüfling um eine Pflanze handelt, insbesondere um eine Pflanze, die zum Zeitpunkt der Applikation des Stoffes oder der Stoffgemische bereits über den Rand der Trägerplatte (30) hinausgewachsen ist. Bei dieser Ausführungsform wird das dreidimensionale Gitter vor dem Auflaufen der Pflanzen auf die Trägerplatte (30) gelegt. Dadurch werden die Wände der Vertiefungen (300) derartig erhöht, daß eine über den Rand der Trägerplatte (30) aufgelaufene Pflanze durch das Besprühen einer benachbarten Pflanze nicht kontaminiert werden kann. Das dreidimensionale Gitter kann auch derart ausgeformt sein, daß zwei oder mehrere gleichartige Gitter übereinander gestapelt werden können, um die Gesamtwandhöhe der Maschen der zu erwartenden Wuchshöhe der jeweiligen Pflanzensorte beliebig anpassen zu können.

Mit Hilfe des anhand der Figuren beschriebenen Testsystems ist das Testen einer sehr großen Anzahl von Stoffen und Prüflingen und eine sichere Identifikation und Zuordnung der Prüflinge und der getesteten Stoffe möglich. Darüberhinaus wird eine Kontamination benachbarter Prüflinge (Blattrondellen) sicher vermieden und daher das Testergebnis nicht beeiflußt bzw. verfälscht. Weiterhin erlaubt das erfindungsgemäße Testsystem einen mehr oder weniger vollautomatischen Betrieb, insbesondere auch über Nacht und ohne Beaufsichtigung. Ein besonderer Vorteil des erfindungsgemäßen Testsystems ist, daß auch kleinste Mengen an Spritzbrühe (10-100 Mikroliter) mit hoher Genauigkeit fein verteilt auf die Pflanzen oder Pflanzenteile aufgesprüht werden können.

## Patentansprüche

1. Verfahren zum Testen von Pestiziden auf ihre Wirksamkeit hin, wobei das zu testende Pestizid auf einen Prüfling, speziell auf Pflanzen oder Pflanzenteile wie Ausschnitte von Blättern und dergleichen, aufgebracht wird und nach Ablauf einer vorgegebenen Zeitdauer der Prüfling auf die Wirksamkeit des Pestizids untersucht wird, dadurch gekennzeichnet, daß zunächst aus einem Vorrat von Prüflingen ein Typ eines Prüflings ausgewählt wird, und aus einem Vorrat von zu testenden Pestiziden die zu testenden Pestizide ausgewählt werden, daß dann mittels eines maschinenlesbaren Codes der ausgewählte Typ Prüfling und die ausgewählten Pestizide identifiziert (BC1, BC2) und diese Codes einer Speichereinheit (12) zugeführt werden, wobei die Prüflinge in einer Trägerplatte (30) bereitgestellt werden und zwar derart, daß die Prüflinge oder ein Ausschnitt (BR) der Prüflinge jeweils in eine in der Trägerplatte (30) vorgesehene und mit einer Nährlösung (301) bzw. einem Gel zumindest teilweise befüllte Vertiefung (300) hinein abgelegt werden und auf diese Weise die Trägerplatte bestückt wird, daß anschließend eine Sprüheinrichtung (150,151,158) entweder sich unmittelbar über die Vertiefung bzw. Vertiefungen (300) der Trägerplatte (30) positioniert und den dort abgelegten Prüfling mit dem ausgewählten Pestizid besprüht oder in die Vertiefung bzw. Vertiefungen (300) der Trägerplatte (30) eintaucht und den dort abgelegten Prüfling mit dem ausgewählten Pestizid besprüht und anschließend wieder aus der Vertiefung (300) heraus auftaucht.

2. Verfahren nach Anspruch 1, dadurch gekennzeichnet, daß es sich bei den Pestiziden um Herbizide, Fungizide oder Insektizide handelt.

3. Verfahren nach Anspruch 1, dadurch gekennzeichnet, daß der Prüfling zunächst einer Stanzeinrichtung (2) zugeführt wird, die aus ihm einen Ausschnitt, wie beispielsweise eine Blattrondelle (BR), automatisch herausstanzt, diesen herausgestanzten Ausschnitt nach dem Ausstanzen festhält und ihn anschließend in eine mit Nährlösung (301) oder einem Gel zumindest teilweise befüllte Vertiefung (300) der Trägerplatte (30) hinein ablegt.

4. Verfahren nach Anspruch 1, dadurch gekennzeichnet, daß mehrere Stoffkonzentrate bzw. Stoffgemischkonzentrate in einem zweiten Einlaufspeicher (8) bereitgestellt werden, die jeweils in Vertiefungen einer Platte eingelagert sind, und daß eine Mischeinrichtung (13) vorgesehen ist zur Herstellung des auf den Prufling aufzubringenden Stoffs bzw. des auf den Prüfling aufzubringenden Stoffgemischs aus dem in der jeweiligen Vertiefung enthaltenen Konzentrat und einer Hilfsmischung (11), und daß der so hergestellte Stoff bzw. das so hergestellte Stoffgemisch dann der Sprüheinrichtung (150,151,158) zugeführt wird.

5. Verfahren nach Anspruch 1 dadurch gekennzeichnet, daß es sich bei dem Prüfling um eine ganze Pflanze handelt.

6. Testsystem zur Durchführung des Verfahrens gemäß einem der Ansprüche 1 bis 5, dadurch gekennzeichnet, daß es
eine Speichereinheit (12), zur Speicherung der Prüflingstypen und der ausgewählten Pestizide mittels eines maschinenlesbaren Codes,
eine Trägerplatte (30), die derart ausgestaltet ist, daß die Prüflinge oder ein Ausschnitt (BR) der Prüflinge jeweils in eine in der Trägerplatte (30) vorgesehene und mit einer Nährlösung (301) bzw. einem Gel zumindest teilweise befüllte Vertiefung (300) hinein abgelegt werden können, und
eine Sprüheinrichtung (150,151,158), die sich entweder unmittelbar über die Vertiefung bzw. Vertiefungen (300) der Trägerplatte (30) positioniert und den dort abgelegten Prüfling mit dem ausgewählten Pestizid besprüht oder in die Vertiefung bzw. Vertiefungen (300) der Trägerplatte (30) eintaucht und den dort abgelegten Prüfling mit dem ausgewählten Pestizid besprüht und anschließend wieder aus der Vertiefung (300) heraus auftaucht, aufweist.

7. Testsystem nach Anspruch 6, dadurch gekennzeichnet, daß es
einen ersten Einlaufspeicher (5), in welchem eine Vielzahl von mit Prüflingen bestückten Trägerplatten (30) vor dem Besprühen zwischengelagert wird, aufweist.

8. Testsystem nach Anspruch 6, dadurch gekennzeichnet, daß die Sprüheinrichtung einen Düsenstock (150) umfaßt, der einen Dichtungsring (152) aufweist, welcher so angeordnet ist, daß er beim Eintauchen der Düse(n) (151) des Düsenstocks (150) in die jeweilige Vertiefung (300) der Trägerplatte (30) die Vertiefung (300) der Trägerplatte (30) dicht umschließt, und daß die Sprüheinrichtung ein Reservoir (156) für den auf den Prüfling aufzubringenden Stoff bzw. das auf den Prüfling aufzubringende Stoffgemisch aufweist sowie einen Sprühkanal (153), der an seinem dem Prüfling abgewandten Ende mit einem Druckluftanschluß versehen ist, wobei das Reservoir (156) und der Sprühkanal (153) durch einen sehr schmalen Zuführkanal (157) miteinander verbunden sind, der in den Sprühkanal (153) hinein mündet.

9. Testsystem nach Anspruch 6, dadurch gekennzeichnet, daß die Sprüheinrichtung eine oder mehrere Mikropipetten (158) umfaßt, welche jeweils einen Vorratsbehälter (160) aufweisen, in welchen der Stoff bzw. das Stoffgemisch zunächst gesaugt wird, und daß dann mit einem piezoelektrischen Tropfengenerator ein oder mehrere Tropfen einer wohldefinierten Größe und einer wohldefinierten Geschwindigkeit durch eine Düse (162) ausgetrieben werden und so der Prüfling besprüht wird.

10. Testsystem nach Anspruch 6, dadurch gekennzeichnet, daß der Düsenstock (150) mehrere zeilenförmig angeordnete Düsen und zugehörige Reservoirs sowie Sprüh- und Zuführkanäle sowie Dichtungsringe aufweist oder mehrere zeilenförmig angeordnete Mikropipetten (158), wobei der Abstand (D) zwischen den einzelnen Düsen bzw. Mikropipetten dem Abstand (E) der Vertiefungen (300) innerhalb einer Zeile der Trägerplatte (30) entspricht.

11. Testsystem nach Anspruch 6, dadurch gekennzeichnet, daß der Düsenstock (150) einen Zuluft- (154) und einen Abluftkanal (155) oder -kanäle umfaßt, welche jeweils so angeordnet sind, daß sie bei in die jeweilige Vertiefung (300) der Trägerplatte (30) eingetauchter Düse (151) mit der Vertiefung (300) kommunizierend in Verbindung stehen.

12. Testsystem nach Anspruch 6, dadurch gekennzeichnet, daß es sich bei den zu testenden chemischen Stoffen um Insektizide, Fungizide, Herbizide, Akarizide oder Nematozide handelt.

13. Testsystem nach Anspruch 6, dadurch gekennzeichnet, daß es sich bei den potentiellen Pflanzenschutzmitteln um Insektizide, Fungizide oder Herbizide handelt.

## Claims

1. A method of testing pesticides for their activity in which the pesticide to be tested is applied to a test specimen, especially to plants or parts of plants, such as sections of leaves and the like, and, after a predetermined period of time has elapsed, the test specimen is examined for the activity of the pesticide, wherein first of all a type of test specimen is selected from a stock of test specimens, and the pesticides to be tested are selected from a stock of pesticides to be tested; the selected type of test specimen and the selected pesticides are then identified (BC1, BC2) by means of a machine-readable code and those codes are supplied to a memory unit (12), the test specimens being placed in readiness in a carrier plate (30) by deposition of each test specimen or a section (BR) of test specimen in a well (300) that is provided in the carrier plate (30) and is at least partly filled with a nutrient solution (301) or a gel and the carrier plate being thus charged; and then a spraying device (150, 151, 158) either is positioned immediately above the well(s) (300) of the carrier plate (30) and sprays the test specimen deposited therein with the selected pesticide, or is inserted into the well(s) (300) of the carrier plate (30) and sprays the test specimen deposited therein with the selected pesticide and is then removed from the well (300) again.

2. A method according to claim 1, wherein the pesticides are herbicides, fungicides or insecticides.

3. A method according to claim 1, wherein the test specimen is first conveyed to a stamping device (2) which automatically stamps out a section, for example a leaf roundel (BR), from the test specimen, retains the stamped-out section after it has been stamped out and then deposits it in a well (300) in the carrier plate (30) that is at least partly filled with nutrient solution (301) or a gel.

4. A method according to claim 1, wherein a plurality of substance concentrates or substance mixture concentrates, each of which has been deposited in wells in a plate, are placed in readiness in a second inlet storage means (8), and a mixing device (13) is provided for the preparation of the substance to be applied to the test specimen, or of the substance mixture to be applied to the test specimen, from the concentrate present in the well in question and an auxiliary mixture (11), and the substance so prepared or the substance mixture so prepared is then conveyed to the spraying device (150, 151, 158).

5. A method according to claim 1, wherein the test specimen is an entire plant.

6. A testing system for carrying out the method according to any one of claims 1 to 5, which comprises
a memory unit (12) for storing the types of test specimen and the selected pesticides by means of a machine-readable code,
a carrier plate (30) which is so configured that each test specimen or a section (BR) of test specimen can be deposited in a well (300) that is provided in the carrier plate (30) and is at least partly filled with a nutrient solution (301) or a gel, and
a spraying device (150, 151, 158) which either is positioned immediately above the well(s) (300) of the carrier plate (30) and sprays the test specimen deposited therein with the selected pesticide, or is inserted into the well(s) (300) of the carrier plate (30) and sprays the test specimen deposited therein with the selected pesticide and is then removed from the well (300) again.

7. A testing system according to claim 6, having a first inlet storage means (5) in which a large number of carrier plates (30) charged with test specimens is stored temporarily before spraying.

8. A testing system according to claim 6, wherein the spraying device comprises a nozzle body (150) having a sealing ring (152) which is so arranged that, on insertion of the nozzle(s) (151) of the nozzle body (150) into the respective well (300) of the carrier plate (30), the sealing ring tightly surrounds the well (300) in the carrier plate (30), and the spraying device has a reservoir (156) for the substance to be applied to the test specimen or the substance mixture to be applied to the test specimen and a spray channel (153) which is provided with a compressed air connection at its end remote from the test specimen, the reservoir (156) and the spray channel (153) being connected to one another by a very narrow feed channel (157) which opens into the spray channel (153).

9. A testing system according to claim 6, wherein the spraying device comprises one or more micropipettes (158), each of which has a stock container (160) into which the substance or the substance mixture is first introduced by suction, and then, using a piezoelectric droplet generator, one or more droplets of a well defined size are expelled through a nozzle (162) at a well defined rate and the test specimen is thus sprayed.

10. A testing system according to claim 6, wherein the nozzle body (150) has a plurality of linearly arranged nozzles and associated reservoirs and also spray and feed channels and sealing rings or a plurality of linearly arranged micropipettes (158), the distance (D) between the individual nozzles or micropipettes corresponding to the distance (E) between the wells (300) within a line of the carrier plate (30).

11. A testing system according to claim 6, wherein the nozzle body (150) comprises an air inlet channel (154) or channels and an air outlet channel (155) or channels, which are each so arranged that while the nozzle (151) is inserted in the respective well (300) in the carrier plate (30) the channels are in communication with the well (300).

12. A testing system according to claim 6, wherein the chemical substances to be tested are insecticides, fungicides, herbicides, acaricides or nematicides.

13. A testing system according to claim 6, wherein the potential plant protection compositions are insecticides, fungicides or herbicides.

## Revendications

1. Procédé pour tester l'efficacité de pesticides, dans le cas duquel le pesticide à tester est appliqué sur un échantillon, spécialement sur des plantes ou des parties de plantes comme des morceaux de feuilles et analogues et, après écoulement d'une durée prescrite, l'échantillon est examiné au point de vue efficacité du pesticide, caractérisé par le fait qu'un type d'échantillon est tout d'abord sélectionné dans un stock d'échantillons et que les pesticides à tester sont sélectionnés dans un stock de pesticides à tester, qu'ensuite le type d'échantillons sélectionné et les pesticides sélectionnés sont identifiés (BC1, BC2) au moyen d'un code-barres lisible par une machine et que ces codes sont amenés à une mémoire (12), les échantillons étant disposés dans une plaque-support (30) et ceci de façon que les échantillons ou un morceau (BR) des échantillons soient, chacun, déposés dans une cavité (300) prévue dans la plaque-support (30) et au moins partiellement remplie d'une solution nutritive (301) ou d'un gel et que la plaque-support soit garnie de cette façon, qu'ensuite un dispositif de pulvérisation (150, 151, 158) se positionne directement au-dessus de la cavité ou des cavités (300) de la plaque-support (30) et pulvérise le pesticide sélectionné sur l'échantillon qui y est déposé ou bien pénètre dans la cavité ou des cavités (300) de la plaque-support (30) et pulvérise le pesticide sélectionné sur l'échantillon qui y est déposé et ressorte ensuite de la cavité (300).

2. Procédé selon la revendication 1, caractérisé par le fait qu'en ce qui concerne les pesticides, il s'agit d'herbicides, de fongicides ou d'insecticides.

3. Procédé selon la revendication 1, caractérisé par le fait que l'échantillon est tout d'abord amené à un dispositif d'estampage (2) qui en obtient automatiquement, par estampage, un morceau, comme par exemple une rondelle de feuille (BR), maintient ce morceau, obtenu par estampage, après l'estampage et le dépose ensuite dans une cavité (300) de la plaque-support (30) au moins partiellement remplie d'une solution nutritive (301) ou d'un gel.

4. Procédé selon la revendication 1, caractérisé par le fait que plusieurs concentrés de substance ou concentrés de mélange de substances sont disposés dans un second stockage d'entrée (8) et sont chacun stockés dans les cavités d'une plaque, et qu'un dispositif de mélange (13) est prévu pour fabriquer la substance à appliquer sur l'échantillon ou le mélange de substances à appliquer sur l'échantillon à partir du concentré contenu dans chacune des cavités et d'un mélange auxiliaire (11), et que la substance ainsi fabriquée ou le mélange de substances ainsi fabriqué est alors amené au dispositif de pulvérisation (150, 151, 158).

5. Procédé selon la revendication 1, caractérisé par le fait qu'en ce qui concerne l'échantillon il s'agit d'une plante entière.

6. Système de test pour la mise en oeuvre du procédé selon l'une des revendications 1 à 5, caractérisé par le fait qu'il présente
une mémoire (12) pour mémoriser les types d'échantillons et les pesticides sélectionnés au moyen d'un code-barres lisible par une machine,
une plaque-support (30) qui est réalisée de façon que les échantillons ou un extrait (BR) des échantillons puissent, chacun, être déposés dans une cavité (300) prévue dans la plaque-support (30) et au moins partiellement remplie d'une solution nutritive (301) ou d'un gel et
un dispositif de pulvérisation (150, 151, 158) qui se positionne directement au-dessus de la cavité ou des cavités (300) de la plaque-support (30) et pulvérise le pesticide sélectionné sur l'échantillon qui y est déposé ou bien pénètre dans la cavité ou des cavités (300) de la plaque-support (30) et pulvérise le pcsticide sélectionné sur l'échantillon qui y est déposé et ressorte ensuite de la cavité (300).

7. Système de test selon la revendication 6, caractérisé par le fait qu'il présente un stockage d'entrée (5) dans lequel sont entreposés, avant la pulvérisation, une pluralité de plaques-supports (30) garnies d'échantillons.

8. Système de test selon la revendication 6, caractérisé par le fait que le dispositif de pulvérisation comporte un bloc-buses (150) qui présente une bague d'étanchéité (152) disposée de façon à enserrer étroitement la cavité (300) de la plaque-support (30) lors de la pénétration de la buse ou des buses (151) du bloc-buses (150) dans la cavité correspondante (300) de la plaque-support (30), et que le dispositif de pulvérisation présente un réservoir (156) pour la substance à appliquer sur l'échantillon ou sur le mélange de substances à appliquer sur l'échantillon, ainsi qu'un canal de pulvérisation (153) qui est muni, à son extrémité opposée à l'échantillon, d'un raccord d'air comprimé, le réservoir (156) et le canal de pulvérisation (153) étant reliés l'un à l'autre par un étroit canal d'amenée (157) qui débouche dans le canal de pulvérisation (153).

9. Système de test selon la revendication 6, caractérisé par le fait que le dispositif de pulvérisation comporte une ou plusieurs micropipettes (158) qui présentent chacune un réservoir (160) dans lequel la substance ou le mélange de substances est tout d'abord aspiré, et qu'ensuite avec un générateur de gouttes piézo-électrique, une ou plusieurs gouttes d'une dimension bien définie et d'une vitesse bien définie sont expulsées par une buse (162) et qu'ainsi l'échantillon reçoit une pulvérisation.

10. Système de test selon la revendication 6, caractérisé par le fait que le bloc-buses (150) présente plusieurs buses et réservoirs associés disposés en rangées ainsi que des canaux de pulvérisation et des canaux d'amenée ainsi que des bagues d'étanchéité ou plusieurs micropipettes (158) disposées en rangées, la distance (D) entre les différentes buses ou micropipcttes correspondant à la distance (E) des cavités (300) à l'intérieur d'une rangée de la plaque-support (30).

11. Système de test selon la revendication 6, caractérisé par le fait que le bloc-buses (150) comporte un canal ou des canaux d'arrivée d'air (154) et d'évacuation d'air (155) qui sont chacun disposés de façon à être reliés et communiquer avec la cavité (300) lorsque la buse (151) a pénétré dans la cavité en question (300) de la plaque-support (30).

12. Système de test selon la revendication 6, caractérisé par le fait qu'en ce qui concerne les substances chimiques à tester, il s'agit d'insecticides, de fongicides, d'herbicides, d'acaricides ou de nématocides.

13. Système de test selon la revendication 6, caractérisé par le fait qu'en ce qui concerne les moyens potentiels de protection des plantes, il s'agit d'insecticides, de fongicides ou d'herbicides.
